# EUROPÄISCHE PATENTANMELDUNG

(11) **EP 2 806 232 A1**
(43) Veröffentlichungstag der Anmeldung: **26.11.2014**
(21) Anmeldenummer: 14160412.4
(22) Anmeldetag: 18.03.2014
(51) Int. Cl.: F24H 1/43, B01D 19/00, F24D 19/08, F16K 24/04

(54) **Vorrichtung zur Rohrwendelentlüftung**

(30) Priorität: 18.04.2013 AT 502642013
(71) Anmelder: WS-System GmbH, 8054 Graz (AT)
(72) Erfinder: Gratz, Michael, 8055 Graz (AT)
(74) Vertreter: Schwarz & Partner

(57) **Zusammenfassung**

Die Erfindung betrifft eine Entlüftungsvorrichtung (1) für einen Rohrwendelwärmetauscher (2), welcher ein Vorlaufrohr (4) sowie ein Rücklaufrohr (6) zum Transport eines Energietransportmediums umfasst, wobei in einer Einbaulage des Rohrwendelwärmetauschers (2) mit im Wesentlichen senkrechter Längsachsenrichtung (15) am höchstgelegenen Rohrwendelabschnitt ein Luftsammelrohr (8) mit dem Vorlaufrohr (4) und/oder dem Rücklaufrohr (6) verbunden ist, und weiters das Luftsammelrohr (8) mit einem Entlüftungsrohr (10) verbunden ist. Innerhalb des Entlüftungsrohres (10) ist ein Kapillarrohr (16) eingeführt, welches Kapillarrohr (16) mit seinem in Einbaulage oberen freien Kapillarrohrende in das Luftsammelrohr (8) mündet und mit diesem verbunden ist.

## Beschreibung

Die vorliegende Erfindung betrifft eine Vorrichtung zur Rohrwendelentlüftung mit den Merkmalen des Oberbegriffs von Anspruch 1.

Aus dem Stand der Technik sind unterschiedliche Vorrichtungen zur Entlüftung von Rohrsystemen bzw. von Energieversorgungssystemen, welche von einem flüssigen Energietransportmedium durchströmt werden, bekannt. Insbesondere bei Rohrwendelwärmetauschern, die meist senkrecht stehend zur Beheizung oder Kühlung in einem Energiespeicher wie beispielsweise einem Heißwasserboiler eingebaut sind, sammeln sich bei längerem Betrieb sowie beim An- und Abfahren des Rohrwendelwärmetauschers konstruktionsbedingt Lufteinschlüsse am höchsten Punkt des Rohrwendelwärmetauschers. Lufteinschlüsse im Kreislauf des Energietransportmediums sind aus mehreren Gründen nachteilig, da sie zu einer verringerten Wärmeübertragung bzw. zu einem reduzierten Wärmedurchgangskoeffizienten des Wärmetauschers bis hin zu einer kompletten Unterbrechung des Mediendurchflusses innerhalb der mit Luft befüllten Rohrwendel führen. Weiters können Umwälzpumpen wie beispielsweise Kreiselpumpen, welche zur Umwälzung des Energietransportmediums dienen, durch mitgerissene Lufteinschlüsse und die damit einhergehenden nachteiligen Kavitationseffekte mechanisch beschädigt werden. Als Energietransportmedium werden je nach Heizungs- oder Kühlungsaufgabe beispielsweise Wasser oder Frostschutzmittel bzw. Frostschutzmittelgemische, Thermoöle oder Kältemittel verwendet.

Aus dem Dokument DE 29 01 650 A1 ist beispielsweise eine Zentralheizung mit einem Schornstein bekannt, in dem ein wendelförmiger Wärmetauscher eingebaut ist, welcher eine Steigleitung als Vorlaufrohr sowie einen Wärmetauscher als Rücklaufrohr umfasst. In senkrechter Einbaulage des Wärmetauschers ist dabei ein Luftsammelrohr mit der Steigleitung oder dem Wärmetauscher verbunden, und das Luftsammelrohr ist weiters mit einer Entlüftungsleitung verbunden.

Außerdem ist aus der Druckschrift CN 2 658 638 Y eine Entlüftungsvorrichtung für einen Wärmetauscher bekannt, wobei in Einbaulage des Wärmetauschers am höchstgelegenen Rohrwendelabschnitt ein Luftsammelrohr mit dem Vorlaufrohr bzw. mit einem Entlüftungsrohr und daran angeordneten Entlüftungsventilen verbunden ist.

Um Lufteinschlüsse in Rohrleitungen zentral entlüften zu können, wird beispielsweise in der Druckschrift AT 509 211 B1 zur Entlüftung von Rohrsystemen mit unter Druck stehenden flüssigen Energietransportmedien ein Kapillarrohr vorgeschlagen, welches am tiefsten Punkt des Rohrsystems eingebracht und befestigt wird und durch das Energietransportmedium hindurch bis zum höchsten Punkt des Rohrsystems reicht. Im Falle des Einsatzes einer derartigen Entlüftungseinrichtung bei einer stehenden Rohrwendel wird innerhalb des vom Energietransportmedium durchströmten Wellrohres ein Kapillarrohr aus Kunststoff vom tiefsten Punkt der Rohrwendel bis zum höchsten Punkt innerhalb der Rohrwendel eingeschoben. An der Spitze des Kapillarrohres befindet sich eine abgerundete Tülle, welche mit Bohrungen versehen ist. Mittels eines handelsüblichen Entlüftungsventils, welches am gegenüberliegenden freien Ende des Kapillarrohres angeordnet ist, kann somit der oberste Bereich der durchströmten Rohrwendel entlüftet werden.

Nachteilig an dieser Ausführung ist, dass die Entlüftung mittels des eingeschobenen Kapillarrohres regelmäßig erfolgen muss, um zu verhindern, dass Lufteinschlüsse das vergleichsweise kleine Innenraumvolumen an der Spitze der Rohrwendel verblocken und es zu einer reduzierten Wärmeübertragung bzw. zu einem verschlechterten Wärmedurchgang des Rohrwendelwärmetauschers kommt. Weiters ist von Nachteil, dass durch das eingeführte Kapillarrohr die freie Querschnittsfläche innerhalb der Rohrwendel zu einem Ringspalt verkleinert wird, wodurch in diesem Rohrabschnitt der Druckverlust erhöht wird sowie durch einen Anstieg der Strömungsgeschwindigkeit innerhalb der Rohrwendel auch die damit verbundenen Fließgeräusche ansteigen.

Es ist somit die Aufgabe der vorliegenden Erfindung eine Vorrichtung zur Entlüftung einer Rohrwendel bereitzustellen, die die geschilderten Nachteile des Stands der Technik vermeidet, und mit welcher das bei einer Entlüftung abzusaugende Leitungsvolumen verkleinert und somit auch Toträume innerhalb der Entlüftungsvorrichtung verringert werden können.

Diese Aufgabe wird bei einer Entlüftungsvorrichtung gemäß dem Oberbegriff des Anspruchs 1 mit den Merkmalen des kennzeichnenden Teiles des Anspruchs 1 gelöst.

Die Unteransprüche betreffen weitere besonders vorteilhafte Ausgestaltungen der Erfindung.

Bei einer erfindungsgemäßen Entlüftungsvorrichtung für einen Rohrwendelwärmetauscher, welcher ein Vorlaufrohr sowie ein Rücklaufrohr zum Transport eines Energietransportmediums umfasst, ist in einer Einbaulage des Rohrwendelwärmetauschers mit im Wesentlichen senkrechter Längsachsenrichtung am höchstgelegenen Rohrwendelabschnitt ein Luftsammelrohr mit dem Vorlaufrohr und/oder dem Rücklaufrohr verbunden, wobei das Luftsammelrohr mit einem Entlüftungsrohr verbunden ist, wobei innerhalb des Entlüftungsrohres ein Kapillarrohr eingeführt ist, welches Kapillarrohr mit seinem in Einbaulage oberen freien Kapillarrohrende in das Luftsammelrohr mündet und mit diesem verbunden ist. Vorteilhaft ist bei dieser Entlüftungsvorrichtung am höchstgelegenen Abschnitt des Rohrwendelwärmetauschers ein Luftsammelrohr befestigt, das mit einem Entlüftungsrohr verbunden ist. Somit dient das Luftsammelrohr als Sammelbehälter für im Energietransportmedium mitgerissene Luft- bzw. Gaseinschlüsse. Da das Luftsammelrohr außerhalb des Strömungspfads des Energietransportmediums angeordnet ist und somit vorteilhaft weder den freien Querschnitt des Vorlaufrohres noch des Rücklaufrohres beeinträchtigt, erfolgt die Durchströmung des Energietransportmediums im Rohrwendelwärmetauscher ohne jegliche Beeinträchtigungen. Mitgerissene Luft- bzw. Gaseinschlüsse können an der Einmündung des Luftsammelrohres am höchstgelegenen Abschnitt des Rohrwendelwärmetauschers in das Luftsammelrohr aufsteigen und somit den Strömungspfad des Energietransportmediums verlassen. Ein unbeabsichtigtes Mitreißen bzw. ein Wiedereintritt von bereits aus dem Strömungspfad abgetrennten Lufteinschlüssen wird somit zuverlässig verhindert.

Abhängig von der Größe und Gestaltung des Luftsammelrohres sowie vom Gasgehalt des zu befördernden Energietransportmediums kann es somit ausreichend sein, nur fallweise bzw. in größeren Zeitabständen den Rohrwendelwärmetauscher zu entlüften, was einen weiteren Vorteil der Erfindung darstellt. Im Rahmen der Erfindung ist es weiters denkbar, das Luftsammelrohr als Luftsammelbehälter zu gestalten oder aber das Luftsammelrohr mit einem weiteren Luftsammelbehälter zu koppeln und das Entlüftungsrohr mit dem Luftsammelbehälter zu verbinden.

Besonders vorteilhaft ist bei einer Entlüftungsvorrichtung gemäß der Erfindung das Luftsammelrohr in im Wesentlichen senkrechter Einbaulage des Rohrwendelwärmetauschers um einen Höhenabstand in Längsachsenrichtung über den höchstgelegenen Rohrwendelabschnitt des Vorlaufrohres und/oder des Rücklaufrohres überhöht befestigt. Eine Überhöhung des Luftsammelrohres um einen Höhenabstand in Längsachsenrichtung über dem höchstgelegenen Rohrwendelabschnitt bietet zahlreiche Vorteile. Luft- bzw. Gasblasen, welche bereits in das Luftsammelrohr gelangt sind und sich nicht mehr innerhalb des Strömungspfads des Energietransportmediums im Rohrwendelwärmetauscher befinden, werden auch bei Druckschwankungen nicht mehr in den Kreislauf des Energietransportmediums zurückgerissen, sondern verbleiben im separaten Luftsammelabschnitt. Durch die Überhöhung bzw. den Höhenabstand gelangen auch kleine Luft- bzw. Gasblasen in den beruhigten Abschnitt des Luftsammelrohres, der anfangs mit stehendem Energietransportmedium befüllt ist. Mit fortlaufender Betriebsdauer gelangen - abhängig vom Anteil des in der Strömung des Energietransportmediums mitgerissenen Gasanteils - mehr oder weniger schnell Lufteinschlüsse in das Luftsammelrohr, wodurch das darin befindliche Energietransportmedium in das unterhalb vorbeiströmende Energietransportmedium gedrückt wird. Wenn das Volumen des Luftsammelrohres mit Luft bzw. Gaseinschlüssen befüllt ist, wird das angesammelte Gasvolumen durch ein Entlüftungsrohr nach außen abgeführt und das nunmehr wieder mit Energietransportmedium befüllte Volumen innerhalb des Luftsammelrohres steht erneut zur Aufnahme von mitgerissenen Lufteinschlüssen zur Verfügung.

Der Höhenabstand der Überhöhung des Luftsammelrohres in Längsachsenrichtung kann beispielsweise einen einfachen oder mehrfachen Außenrohrdurchmesser des Luftsammelrohres oder des Vorlauf- bzw. Rücklaufrohres betragen.

Zweckmäßig ist bei einer erfindungsgemäßen Entlüftungsvorrichtung das Luftsammelrohr zumindest abschnittsweise in einem Winkel, vorzugsweise in einem rechten Winkel, zur Längsachsenrichtung des Rohrwendelwärmetauschers befestigt. In dieser Ausführung ist das Luftsammelrohr beispielsweise in einem spitzen Winkel schräg nach oben von der Längsachsenrichtung des Rohrwendelwärmetauschers abstehend befestigt. In dieser Variante werden aufsteigende bzw. abgezogene Lufteinschlüsse innerhalb des Luftsammelrohres möglichst weit von der Einmündungsstelle des Luftsammelrohres in den Strömungspfad des Energietransportmediums abtransportiert, um einen unbeabsichtigten Wiedereintritt von bereits abgetrennten Lufteinschlüssen in die Kreislaufströmung zu verhindern.

In einer weiteren bevorzugten Ausführung ist das Luftsammelrohr im Wesentlichen in einem rechten Winkel zur Längsachsenrichtung des Rohrwendelwärmetauschers befestigt. In dieser Ausführung wird eine besonders kompakte Bauform eines Rohrwendelwärmetauschers mit möglichst geringer Baulänge erzielt.

In einer vorteilhaften Weiterentwicklung der Erfindung ist bei einer Entlüftungsvorrichtung das Entlüftungsrohr mit einem freien Ende des Luftsammelrohres verbunden. In dieser Ausführung ist das Entlüftungsrohr am freien Ende des Luftsammelrohres und somit möglichst weit von der Einmündungsstelle des Luftsammelrohres in den Strömungskreislauf des Rohrwendelwärmetauschers entfernt vorgesehen. Somit erfolgt das Abziehen der im Luftsammelrohr gesammelten Lufteinschlüsse im Entlüftungsrohr ohne Beeinflussung durch die Kreislaufströmung des Energietransportmediums.

Besonders vorteilhaft sind bei einer erfindungsgemäßen Entlüftungsvorrichtung das Luftsammelrohr sowie das Entlüftungsrohr jeweils außerhalb des Strömungspfads des Energietransportmediums angeordnet. Der Strömungspfad des Energietransportmediums innerhalb des Vorlaufrohres bzw. Rücklaufrohres des Rohrwendelwärmetauschers wird durch das seitlich anschließende Luftsammelrohr nicht beeinträchtigt.

Zweckmäßig sind bei einer Entlüftungsvorrichtung gemäß der Erfindung das Luftsammelrohr sowie das Entlüftungsrohr außerhalb des Rohrwendelwärmetauschers angeordnet.

Von Vorteil weisen bei einer erfindungsgemäßen Entlüftungsvorrichtung das Vorlaufrohr sowie das Rücklaufrohr jeweils dieselbe freien Rohrquerschnittsfläche, denselben Innendurchmesser sowie denselben Außendurchmesser auf. Somit ist es möglich, das Vorlaufrohr sowie das Rücklaufrohr bei sonst konstanten Strömungsverhältnissen aus demselben Rohrmaterial zu fertigen.

Zweckmäßig sind bei einer Entlüftungsvorrichtung gemäß der Erfindung das Vorlaufrohr sowie das Rücklaufrohr aus einem Wellrohr hergestellt. Ein Wellrohr bietet den Vorteil, dass es besonders einfach beispielsweise zu einer Rohrwendel geformt werden kann. Weiters bietet die wellenförmige bzw. gerippte Oberfläche des Wellrohres den Vorteil, dass die Wärmetauscherfläche vergrößert und somit der Wärmedurchgangskoeffizient des Wärmetauschers erhöht wird.

Bei der erfindungsgemäßen Entlüftungsvorrichtung ist innerhalb des Entlüftungsrohres ein Kapillarrohr eingeführt, welches Kapillarrohr mit seinem in Einbaulage oberen freien Kapillarrohrende in das Luftsammelrohr mündet und mit diesem verbunden ist. Durch ein Kapillarrohr, welches innerhalb des Entlüftungsrohres eingeführt ist, werden das bei einer Entlüftung abzusaugende Volumen des Energietransportmediums verkleinert und somit auch Toträume innerhalb der Entlüftungsvorrichtung verringert. Weiters ist von Vorteil, dass durch das Kapillarrohr Lufteinschlüsse aus dem Rohrwendelwärmetauscher leichter gegen einen niederen Umgebungsdruck nach außen geführt werden können. Durch das äußere Entlüftungsrohr ist das innenliegende dünne Kapillarrohr vorteilhaft vor mechanischen Beschädigungen geschützt.

Vorteilhaft ist bei einer erfindungsgemäßen Entlüftungsvorrichtung am Entlüftungsrohr zumindest ein Entlüftungsventil angeordnet. Ein Entlüftungsventil bietet den Vorteil, dass auch bei Druckschwankungen innerhalb des Kreislaufs des Energietransportmediums nur dann Luft- bzw. Gaseinschlüsse abgezogen werden, wenn das Entlüftungsventil geöffnet wird. Je nach Anforderungen ist es beispielsweise denkbar, mehrere Entlüftungsventile in Serienschaltung am Entlüftungsrohr vorzusehen. Im Rahmen der Erfindung ist es ebenfalls vorgesehen, automatische Entlüftungsventile oder mit einer Steuerungseinrichtung gekoppelte Entlüftungsventile vorzusehen.

In einer Weiterbildung der Erfindung ist bei einer Entlüftungsvorrichtung am Kapillarrohr zumindest ein Entlüftungsventil angeordnet. Bei einer Ausführung mit einem Kapillarrohr ist es zweckmäßig, wenn das zumindest eine Entlüftungsventil am Kapillarrohr angeordnet ist. Das Kapillarrohr ist dazu gegenüber dem außen umgebenden Entlüftungsrohr entsprechend abgedichtet.

Zweckmäßig ist bei einer erfindungsgemäßen Entlüftungsvorrichtung das Kapillarrohr aus Kunststoff hergestellt. In dieser Ausführung ist es besonders einfach sowie kostengünstig möglich, das Kapillarrohr in das umgebende Entlüftungsrohr einzuführen.

In einer bevorzugten Ausführungsvariante der Erfindung ist bzw. sind bei einer Entlüftungsvorrichtung das Luftsammelrohr und/oder das Entlüftungsrohr aus einem starren Material, vorzugsweise aus einem korrosionsbeständigen sowie druckfesten Metallrohr, hergestellt. In dieser Variante werden durch die starre Materialwahl mögliche Schwingungen beim Entlüften des Luftsammelrohres bzw. des Entlüftungsrohres verhindert.

In einer weiteren vorteilhaften Ausführungsvariante der Erfindung ist bzw. sind bei einer Entlüftungsvorrichtung das Luftsammelrohr und/oder das Entlüftungsrohr aus einem flexiblen Material, vorzugsweise aus einem korrosionsbeständigen sowie druckfesten Wellrohr, hergestellt. In dieser Ausführung ist es aufgrund der Wahl eines flexiblen Materials besonders einfach möglich, das Luftsammelrohr bzw. das Entlüftungsrohr möglichst platzsparend innerhalb von Ausnehmungen des Rohrwendelwärmetauschers anzuordnen.

Ebenso ist es im Rahmen der Erfindung möglich, auch das Vorlaufrohr und/oder Rücklaufrohr des Rohrwendelwärmetauschers je nach Anforderung wahlweise aus flexiblen oder aus starren Materialien zu fertigen. Als starres Material kommt beispielsweise der Einsatz von korrosionsbeständigem Edelstahl in Betracht. Ein Rohrwendelwärmetauscher aus einem flexiblen Material kann beispielsweise zumindest teilweise aus Kunststoff hergestellt sein.

Weitere Einzelheiten, Merkmale und Vorteile der Erfindung ergeben sich aus der nachfolgenden Erläuterung von in den Zeichnungen schematisch dargestellten Ausführungsbeispielen. In den Zeichnungen zeigen:
- Fig. 1 in einer teilweisen Schnittansicht von vorne eine Ausführungsvariante einer Entlüftungsvorrichtung für einen Rohrwendelwärmetauscher;
- Fig. 2 ein vergrößertes Detail von Fig. 1;
- Fig. 3 in einer teilweisen Schnittansicht von vorne eine Ausführungsvariante einer erfindungsgemäßen Entlüftungsvorrichtung für einen Rohrwendelwärmetauscher;
- Fig. 4 ein vergrößertes Detail von Fig. 3.

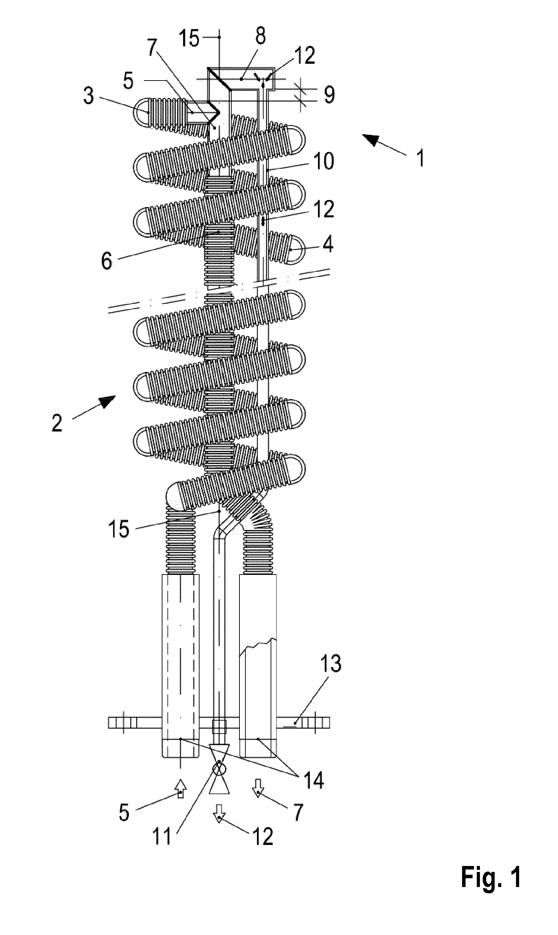

Fig. 1 betrifft eine Ausführung einer Entlüftungsvorrichtung 1 für einen Rohrwendelwärmetauscher 2. Der hier gezeigte Rohrwendelwärmetauscher 2 ist aus einem Wellrohr 3 hergestellt und umfasst zum Transport eines Energietransportmediums ein Vorlaufrohr 4, in dem das Energietransportmedium in Vorlaufrichtung 5 strömt, sowie ein daran anschließendes Rücklaufrohr 6 für den Rücklauf 7 des Energietransportmediums. Das Vorlaufrohr 4 sowie das Rücklaufrohr 6 bilden einen Abschnitt einer Kreislaufleitung für das Energietransportmedium. Weitere Bauteile der Kreislaufleitung wie beispielsweise eine oder mehrere Umwälzpumpen, Ausgleichsgefäße oder Armaturen sind in den Figuren nicht dargestellt. Am höchsten Punkt des Rohrwendelwärmetauschers 2 ist ein Luftsammelrohr 8 mit dem Vorlaufrohr 4 bzw. dem Rücklaufrohr 6 verbunden. Das Luftsammelrohr 8 ist hier im Wesentlichen quer zur Längsachsenrichtung 15 des Rohrwendelwärmetauschers 2 in einem Höhenabstand 9 vom Rohrwendelwärmetauscher 2 entfernt angeordnet. Das Luftsammelrohr 8 ist mit einem Entlüftungsrohr 10 verbunden, an dessen entgegengesetztem Ende ein Entlüftungsventil 11 vorgesehen ist. Wenn sich während des Betriebs oder beim Anfahren des Kreislaufs des Energietransportmediums Luftblasen in der Kreislaufleitung bzw. innerhalb des Vorlaufrohres 4 bzw. des Rücklaufrohres 6 bilden, so gelangen diese Gaseinschlüsse in das um den Höhenabstand 9 überhöht angeordnete Luftsammelrohr 8, werden dort gesammelt und kontinuierlich oder diskontinuierlich mittels des Entlüftungsrohres 10 bei geöffnetem Entlüftungsventil 11 in Luftabzugsrichtung 12 nach außen abgezogen.

Je nach Anforderung kann im Rahmen der Erfindung selbstverständlich auch die Strömungsrichtung des Energietransportmediums im Vorlaufrohr 4 sowie im Rücklaufrohr 6 umgekehrt werden, wodurch das Rücklaufrohr 6 als Vorlauf sowie das Vorlaufrohr 4 als Rücklauf des Energietransportmediums dient. Dies ist beispielsweise der Fall, wenn das gesamte Leitungssystem in umgekehrter Durchströmungsrichtung gespült oder entleert werden muss. In der weiteren Figurenbeschreibung wird jedoch der Einheitlichkeit halber jeweils das Vorlaufrohr 4 dem Vorlauf 5 sowie das Rücklaufrohr 6 dem Rücklauf 7 des Energietransportmediums zugeordnet.

Weiters ist in Fig. 1 ein Befestigungsflansch 13 zur Befestigung des Rohrwendelwärmetauschers 2 am Behältergehäuse eines nicht dargestellten Energiespeichers wie beispielsweise eines Heißwasserboilers vorgesehen. Am Befestigungsflansch 13 sind das gewendelte Vorlaufrohr 4 sowie das Rücklaufrohr 6 befestigt. Die beiden Rohre 4 und 6 weisen jeweils entsprechende Anschlüsse 14 zur Koppelung mit der Kreislaufleitung des Energietransportmediums auf. Die beiden Rohre 4 und 6 sind hier am Befestigungsflansch 13 im Wesentlichen senkrecht sowie parallel zur Längsachsenrichtung 15 des Rohrwendelwärmetauschers 2 befestigt. Der Befestigungsflansch 13 weist außerdem eine Durchführung für das nach außen aus dem Energiespeicherbehälter hervorragende Entlüftungsrohr 10 auf. Das Entlüftungsventil 11 liegt ebenfalls außerhalb des Befestigungsflansches 13 an der in Einbaulage Außenseite des Energiespeicherbehälters.

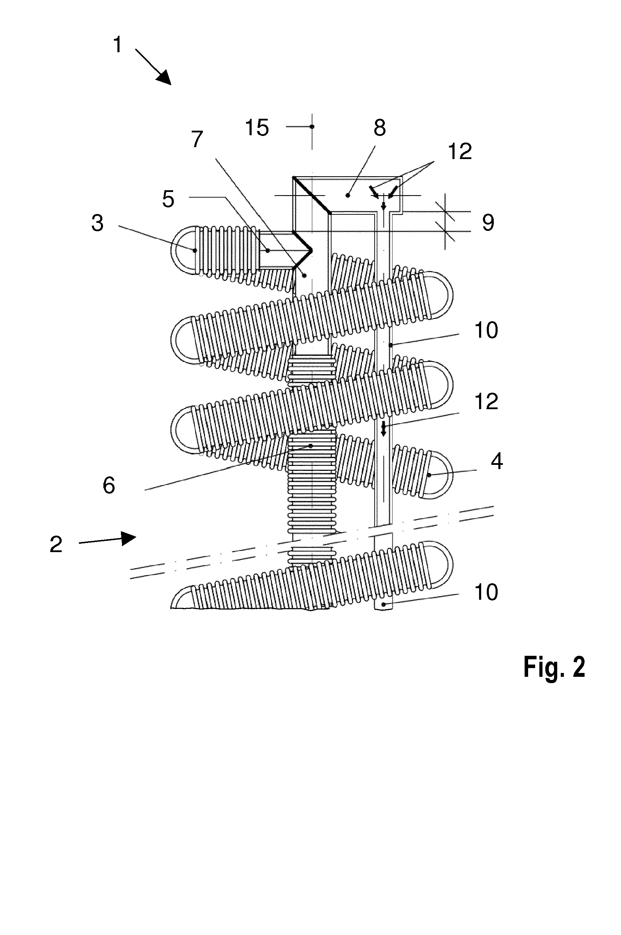

Fig. 2 betrifft ein vergrößertes Detail von Fig. 1, in dem der in Einbaulage des Rohrwendelwärmetauschers 2 mit im Wesentlichen senkrechter Längsachsenrichtung 15 am höchstgelegenen Rohrwendelabschnitt dargestellt ist. Am Übergang vom gewendelten Vorlaufrohr 4 zum in Längsachsenrichtung 15 senkrecht nach unten führenden Rücklaufrohr 6 ist das Luftsammelrohr 8 mit einem daran anschließenden Entlüftungsrohr 10 verbunden.

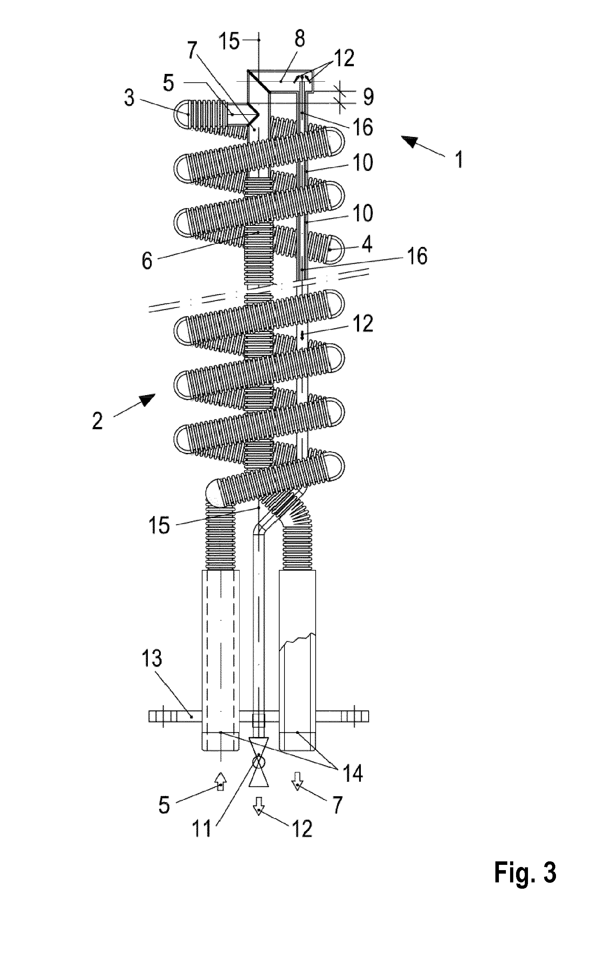

Fig. 3 veranschaulicht eine Ausführungsvariante einer erfindungsgemäßen Entlüftungsvorrichtung 1 für einen Rohrwendelwärmetauscher 2. Im Unterschied zur in Fig. 1 bzw. Fig. 2 gezeigten Ausführung weist hier die Entlüftungsleitung innerhalb des Entlüftungsrohres 10 ein zusätzliches Kapillarrohr 16 auf, welches beispielsweise aus Kunststoff oder aus Metall hergestellt ist. Das Kapillarrohr 16 ist an seinem oberen freien Ende offen und ragt mit diesem in das hier quer zur Längsachsenrichtung 15 angeordnete Luftsammelrohr 8. Gaseinschlüsse können bei geöffnetem Entlüftungsventil 11 innerhalb des Kapillarrohres 16 nach außen abgezogen werden. Das Kapillarrohr 16 bietet den Vorteil, dass die Menge an beim Entlüften mitabgezogenem Energietransportmedium verringert wird. Das Kapillarrohr 16 ist durch das umgebende Entlüftungsrohr 10 auch mechanisch geschützt. Je nach Ausführung kann das Entlüftungsventil 11 wahlweise am Entlüftungsrohr 10 oder am Kapillarrohr 16 angeordnet sein. Es ist im Ringspalt zwischen dem äußeren Entlüftungsrohr und dem inneren Kapillarrohr 16 eine entsprechende Abdichtung vorzusehen.

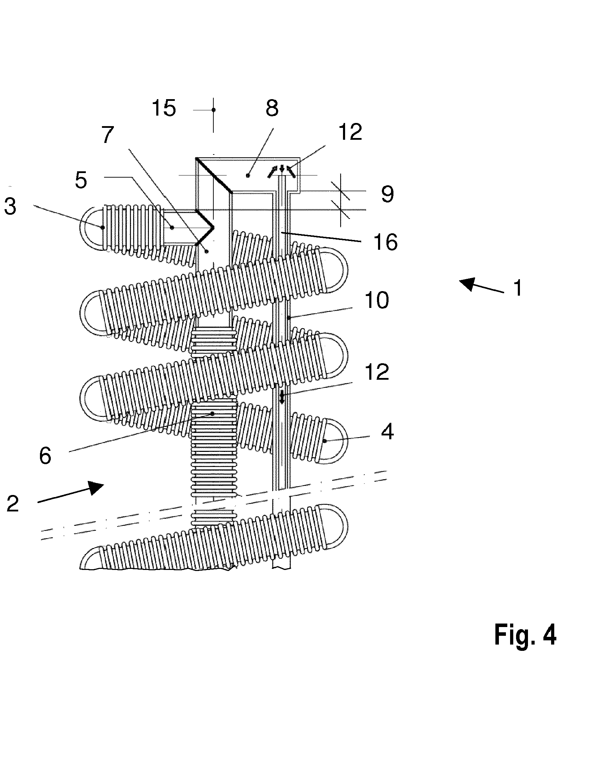

Fig. 4 zeigt ein vergrößertes Detail von Fig. 3, in dem der in Einbaulage des Rohrwendelwärmetauschers 2 mit im Wesentlichen senkrechter Längsachsenrichtung 15 am höchstgelegenen Rohrwendelabschnitt dargestellt ist.

Weitere Ausführungen einer erfindungsgemäßen Entlüftungsvorrichtung, die hier in den Figuren nicht explizit gezeigt sind, und welche beispielsweise ein schräg nach oben ansteigendes Luftsammelrohr 8 oder anstelle eines Luftsammelrohres oder in Kombination mit diesem einen Luftsammelbehälter aufweisen, sind ebenfalls von der Erfindung mitumfasst.

### Liste der Positionszeichen:

- 1: Entlüftungsvorrichtung
- 2: Rohrwendelwärmetauscher
- 3: Wellrohr
- 4: Vorlaufrohr
- 5: Vorlauf des Energietransportmediums
- 6: Rücklaufrohr
- 7: Rücklauf des Energietransportmediums
- 8: Luftsammelrohr
- 9: Höhenabstand
- 10: Entlüftungsrohr
- 11: Entlüftungsventil
- 12: Luftabzug (Pfeilrichtung)
- 13: Befestigungsflansch
- 14: Anschluss des Energietransportmediums
- 15: Längsachsenrichtung des Rohrwendelwärmetauschers
- 16: Kapillarrohr

## Patentansprüche

1. Entlüftungsvorrichtung (1) für einen Rohrwendelwärmetauscher (2), welcher ein Vorlaufrohr (4) sowie ein Rücklaufrohr (6) zum Transport eines Energietransportmediums (5, 7) umfasst, wobei in einer Einbaulage des Rohrwendelwärmetauschers (2) mit im Wesentlichen senkrechter Längsachsenrichtung (15) am höchstgelegenen Rohrwendelabschnitt ein Luftsammelrohr (8) mit dem Vorlaufrohr (4) und/oder dem Rücklaufrohr (6) verbunden ist, wobei das Luftsammelrohr (8) mit einem Entlüftungsrohr (10) verbunden ist, **dadurch gekennzeichnet, dass** innerhalb des Entlüftungsrohres (10) ein Kapillarrohr (16) eingeführt ist, welches Kapillarrohr (16) mit seinem in Einbaulage oberen freien Kapillarrohrende in das Luftsammelrohr (8) mündet und mit diesem verbunden ist.

2. Entlüftungsvorrichtung (1) nach Anspruch 1, **dadurch gekennzeichnet, dass** das Luftsammelrohr (8) in im Wesentlichen senkrechter Einbaulage des Rohrwendelwärmetauschers (2) um einen Höhenabstand (9) in Längsachsenrichtung (15) über dem höchstgelegenen Rohrwendelabschnitt des Vorlaufrohres (4) und/oder Rücklaufrohres (6) überhöht befestigt ist.

3. Entlüftungsvorrichtung (1) nach Anspruch 1 oder 2, **dadurch gekennzeichnet, dass** das Luftsammelrohr (8) zumindest abschnittsweise in einem Winkel, vorzugsweise in einem rechten Winkel, zur Längsachsenrichtung (15) des Rohrwendelwärmetauschers (2) befestigt ist.

4. Entlüftungsvorrichtung (1) nach einem der vorigen Ansprüche, **dadurch gekennzeichnet, dass** das Entlüftungsrohr (10) mit einem freien Ende des Luftsammelrohres (8) verbunden ist.

5. Entlüftungsvorrichtung (1) nach einem der vorigen Ansprüche, **dadurch gekennzeichnet, dass** das Luftsammelrohr (8) sowie das Entlüftungsrohr (10) jeweils außerhalb des Strömungspfads des Energietransportmediums (5, 7) angeordnet sind.

6. Entlüftungsvorrichtung (1) nach einem der vorigen Ansprüche, **dadurch gekennzeichnet, dass** das Vorlaufrohr (4) sowie das Rücklaufrohr (6) jeweils dieselbe freie Rohrquerschnittsfläche, denselben Innendurchmesser sowie denselben Außendurchmesser aufweisen.

7. Entlüftungsvorrichtung (1) nach einem der vorigen Ansprüche, **dadurch gekennzeichnet, dass** das Vorlaufrohr (4) sowie das Rücklaufrohr (6) aus einem Wellrohr (3) hergestellt sind.

8. Entlüftungsvorrichtung (1) nach einem der vorigen Ansprüche, **dadurch gekennzeichnet, dass** am Entlüftungsrohr (10) zumindest ein Entlüftungsventil (11) angeordnet ist.

9. Entlüftungsvorrichtung (1) nach einem der vorigen Ansprüche, **dadurch gekennzeichnet, dass** am Kapillarrohr (16) zumindest ein Entlüftungsventil (11) angeordnet ist.

10. Entlüftungsvorrichtung (1) nach einem der vorigen Ansprüche, **dadurch gekennzeichnet, dass** das Kapillarrohr (16) aus Kunststoff hergestellt ist.

11. Entlüftungsvorrichtung (1) nach einem der vorigen Ansprüche, **dadurch gekennzeichnet, dass** das Luftsammelrohr (8) und/oder das Entlüftungsrohr (10) aus einem starren Material, vorzugsweise aus einem korrosionsbeständigen sowie druckfesten Metallrohr, hergestellt ist bzw. sind.

12. Entlüftungsvorrichtung (1) nach einem der vorigen Ansprüche, **dadurch gekennzeichnet, dass** das Luftsammelrohr (8) und/oder das Entlüftungsrohr (10) aus einem flexiblen Material, vorzugsweise aus einem korrosionsbeständigen sowie druckfesten Wellrohr, hergestellt ist bzw. sind.
